# EUROPÄISCHE PATENTSCHRIFT

(11) **EP 1 725 484 B1**
(45) Veröffentlichungstag und Bekanntmachung des Hinweises auf die Patenterteilung: **14.05.2008**
(21) Anmeldenummer: 05707717.4
(22) Anmeldetag: 05.03.2005
(51) Int. Cl.: B65G 47/91

(54) **SAUGGREIFEREINSTELLSTEUERUNG MIT STEUERVENTILBLOCK**
VACUUM GRIPPER ADJUSTMENT CONTROLLER HAVING A CONTROL VALVE BLOCK
DISPOSITIF DE COMMANDE POUR REGLER UNE PINCE ASPIRANTE COMPRENANT UN BLOC SOUPAPE DE DISTRIBUTION

(30) Priorität: 11.03.2004 DE 102004011876
(43) Veröffentlichungstag der Anmeldung: 29.11.2006
(73) Patentinhaber: Trumpf Sachsen GmbH, 01904 Neukirch (DE); J. Schmalz GmbH, 72293 Glatten (DE)
(72) Erfinder: VOGEL, Klaus, 02681 Kirschau OT Rodewitz (DE); EISELE, Thomas, 78737 Fluorn-Winzeln (DE)
(74) Vertreter: Schmitt, Martin
(86) Internationale Anmeldenummer: PCT/EP2005/002347
(87) Internationale Veröffentlichungsnummer: WO 2005/087631

(56) Entgegenhaltungen:
- EP-A- 1 232 990
- WO-A-02/103226
- DE-A1- 19 544 490
- US-A- 4 793 657
- US-A- 6 149 375

## Beschreibung

Die Erfindung betrifft einen Aufbau zur Sauggreifereinstellsteuerung, die einen Steuerventilblock zur Schaltung eines Druckluftstromes enthält.

Sauggreiferfelder mit einer Vielzahl von Sauggreifern sind u.a. aus DE 32 34 216 A1 " Vorrichtungen zum Be- und insbesondere Entladen von Bearbeitungsmaschinen", DE 36 28 381 C2 "Sauggreifer", DE 36 37 567 A1 "Saugvorrichtung an einer oder für eine Bearbeitungsmaschine", DE 299 02 297 U1 "Saughaltevorrichtung" und DE 101 18 386 A1 "Ladevorrichtung mit gezielter Sauggreifersteuerung" bekannt. Bei der Aufnahme von Schnitteilen werden nicht alle Sauggreifer des Sauggreiferfeldes benötigt. Die nicht benötigten Sauggreifer werden nach DE 32 34 216 A1 gezielt abgeschaltet, nach DE 36 28 381 C2 in Reihen abgeschaltet, nach " DE 36 37 567 A1 durch Aufsetztaster gesteuert angeschaltet, nach DE 299 02 297 U1 in Feldern aufgeteilt abgeschaltet oder nach DE 101 18 386 A1 mittels einem Programm ausgewählt abgeschaltet werden.

Alle Sauggreifer dieser Sauggreiferfelder werden bei der Aufnahme von Schnitteilen auf die Arbeitsfläche abgesenkt und nur die Sauggreifer aktiviert, die auf einem Schnitteil aufsitzen. Das führt dazu, daß die nicht benötigten Sauggreifer unnötig bewegt und mit Abblasluft versorgt werden. Dabei ist eine Beschädigung dieser Sauggreifer beim Aufsetzen auf die Arbeitsfläche möglich. Weiterhin soll ein Aufrechterhalten des Vakuums auch bei Stromausfall und damit der Steuerung der Sauggreifer erfolgen.

Aus DE 195 44 490 A1 "Vakuumsauger und Platinenlader" ist eine Saugereinrichtung bekannt, bei der sich die nicht benötigten Sauggreifer von Hand einstellbar in einer Ruheposition befinden, in der sie von der Vakuumquelle durch Ventilmittel getrennt sind, und bei der nur die in der abgesenkten Arbeitsposition arretiert befindlichen Sauggreifer durch die Ventilmittel mit der Vakuumquelle verbunden sind.

Aus der US-A-6 149 375 ist ein weiterer sauggreifereinrichtung bekannt.

Ziel und Aufgabe der Erfindung ist es, eine Sauggreifereinstellsteuerung mit Steuerventilblock zu finden, durch die nur die zu aktivierenden Sauggreifer aus einem Sauggreiferfeld auf einen Werktisch von einem Programm gesteuert abgesenkt werden.

Erfindungsgemäß ist diese Aufgabe durch die Merkmale des ersten Anspruchs gelöst. Weitere zweckmäßige Ausgestaltungen der Erfindung sind Gegenstand der Unteransprüche.

Zum ausgewählten Absenken von zu aktivierenden Sauggreifern aus einem Sauggreiferfeld ist eine Sauggreifereinstellsteuerung mit Steuerventilblock aufgebaut. Jeder Sauggreifer ist am Kolben eines mit Druckleitungen verbundenen Pneumatikzylinder befestigt. An den Pneumatikzylinder greift zum Anheben eine erste Druckleitung und zum Absenken eine zweite Druckleitung über den Steuerventilblock an. Eine Saug-Abblasleitung ist über den Steuerventilblock an den Sauggreifer angeschlossen. An den Steuerventilblock ist eine Steuerdruckleitung so angeschlossen, daß sie stirnseitig auf die Ventilkolben der in den Ventilsitzen im Steuerventilblock sich befindenden Steuerkolben wirkt. In dem Steuerventilblock sind mindestens ein Paar Ventilsitze eingelassen. In jedem aus einem Kolbenraum und einer Ausströmleitung bestehenden Ventilsitz befindet sich vor der Einmündung der Arbeitsdruckluftzufuhr aus der zweiten Druckleitung bzw. aus der Saug-Abblasleitung ein im Kolbenraum federgelagerter geteilter Kolben. Dessen Dichtteil dichtet gegen den Federdruck den Kolbenraum gegen die Ausströmleitung ab, und dessen Gegenstück dichtet den Kolbenraum gegen die Steuerdruckleitung ab. In der Ausströmleitung des die Saug-Abblasleitung steuernden Ventilsitz befindet sich ein Ejektor zur Unterdruckerzeugung in der Saug-Abblasleitung.

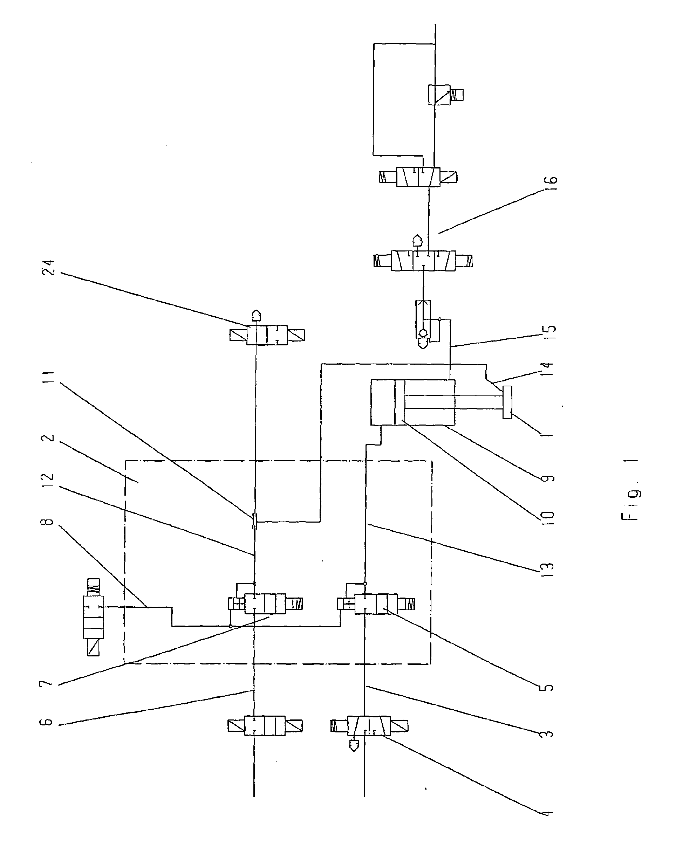

Die Erfindung soll nachstehend an Hand eines Ausführungsbeispiels näher erläutert werden. Die zugehörige Zeichnung zeigt in
- Fig. 1: ein Schaltbild der Sauggreifereinstellsteuerung

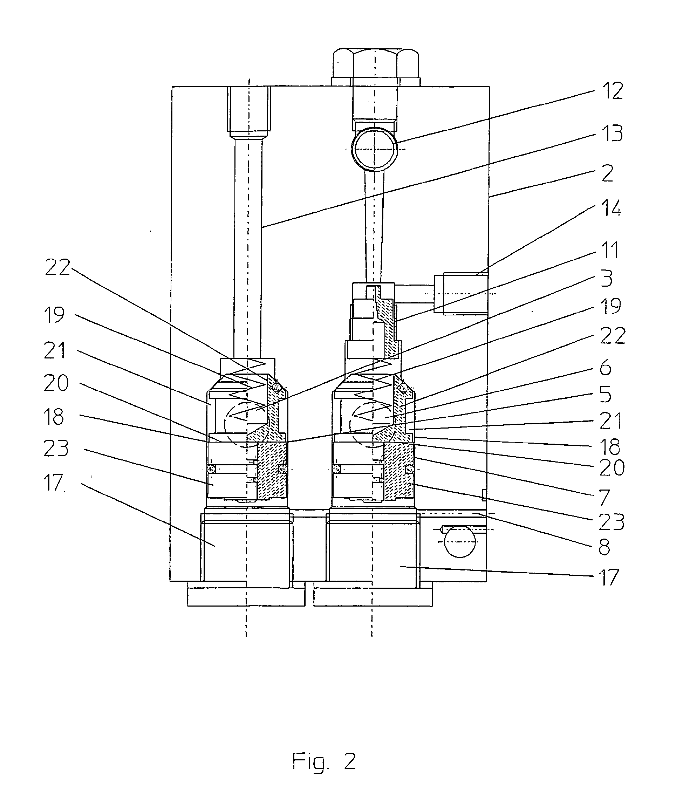

- Fig. 2: einen Schnitt durch einen Steuerventilblock.

Die Sauggreifereinstellsteuerung für einen Sauggreifer 1 enthält einen Steuerventilblock 2, zu dem zu einem eine Arbeitsdruckluftleitung 3 über ein Vorventil 4 zu einem Absenkventilsitz 5 im Steuerventilblock 2, und zu dem zum anderen eine Saug-Abblasdruckleitung 6 zu einem Vakuumventilsitz 7 im Steuerventilblock 2 und eine Steuerdruckleitung 8 zum Absenkventilsitz 5 und zum Vakuumventilsitz 7 führt. Vom Absenkventilsitz 5 führt eine Ausströmleitung 13 zu einem Pneumatikzylinder 9, dessen Kolben 10 den Sauggreifer 1 bewegt. Dem Vakuumventilsitz 7 folgt ein Ejektor 11, der über eine Ausströmleitung 12 über ein Sperrventil 24 mit der Umgebung verbunden ist und an dem eine zum Sauggreifer 1 führende Saug-Abblasleitung 14 angeschlossen ist. Zum Anheben des Sauggreifers 1 ist am Pneumatikzylinder 9 eine Druckleitung 15 über eine Einstellventilgruppe 16 angeschlossen. Der Absenkventilsitz 5 und der Vakuumventilsitz 7 im Steuerventilblock 2 haben nahezu den gleichen Aufbau. Vor der Einmündung der Arbeitsdruckluftleitung 3 in den Absenkventilsitz 5 und vor der Einmündung der Saug-Abblasdruckeitung 6 in den Vakuumventilsitz 7 befindet sich in einem mit einem Stopfen 17 verschlossenen Kolbenraum 18 ein auf einer zwischen der Ausströmleitung 12 befindlichen Feder 19 gelagerter zweigeteilter Kolben 20. Dessen mit einer Ringnut 21 versehenes Dichtteil 22 dichtet den Kolbenraum 18 gegen die zum Pneumatikzylinder 9 führende Ausströmleitung 13 bzw. gegen die zum Sperrventil 24 führende Ausströmleitung 12 ab. Ein Gegenstück 23 zum Dichtteil 22 des zweigeteilten Kolbens 20 dichtet den Kolbenraum 18 gegen den über dem Stopfen 17 befindlichen Teil des Kolbenraums 18 ab, in den die Steuerdruckleitung 8 einmündet.

Zur Einstellung der Sauggreifer 1 im Sauggreiferfeld werden durch Druck auf die Leitung 15 alle Sauggreifer 1 angehoben und durch einen verminderten Druck in der Leitung 15 in dieser Stellung gehalten. Weiterhin wird die Steuerleitung 8 unter Druck gesetzt und die zweigeteilten Kolben 20 im Absenkventilsitz 5 und im Vakuumventilsitz 7 schließen unter Spannen der Feder 19 die zum Pneumatikzylinder 9 führende Ausströmleitung 13 bzw. die zum Sperrventil 24 führende Ausströmleitung 12. Damit bleiben die Sauggreifer 1 auch bei Aktivieren der Arbeitsdruckleitung 3 unter Unterstützung der Wirkung des Drucks in der Steuerleitung angehoben. Zum Absenken und Aktivieren eines Sauggreifers 1 wird der Druck in der Steuerdruckleitung 8 abgeschaltet. Die Feder 19 öffnet durch Verschieben des Kolbens 20 die zum Pneumatikzylinder 9 führende Ausströmleitung 13. Der Arbeitsdruck in der Arbeitsdruckleitung 3 kann nun über den Absenkventilsitz 5 auf den Kolben 10 im Pneumatikzylinder 9 wirken und den Sauggreifer 1 absenken. Nach dem Absenken des Sauggreifers 1 wird die Saug-Abblasdruckleitung 6 unter Druck gesetzt. Da die Ausströmleitung 12 ebenfalls durch Verschieben des Kolben 20 von der Feder 19 geöffnet ist, wird der Ejektor 11 aktiviert und es entsteht Unterdruck in der zum Sauggreifer 1 führenden Saug-Abblasleitung 14. Wird das Sperrventil 13 geschlossen, strömt die Druckluft in der Ausströmleitung 12 über den Ejektor 11 als Abblasluft in die zum Sauggreifer 1 führenden Saug-Abblasleitung 14. Fällt der Druck beim Arbeiten des Sauggreiferfeldes in der Steuerleitung 8 aus, so bleiben die eingestellten Funktionen erhalten, da sich der Kolben 20 teilt, das Dichtteil 22 des Kolbens in der eingestellten Position verbleibt, während das Gegenstück 23 die Einmündung der Steuerdruckleitung 8 in den Kolbenraum 18 verschließend zum Stopfen 17 hin verschoben wird.

### Aufstellung der verwendeten Bezugszeichen

- 1: Sauggreifer
- 2: Steuerventilblock
- 3: Arbeitsdruckluftleitung
- 4: Vorventil
- 5: Absenkventilsitz
- 6: Saug-Abblasdruckleitung
- 7: Vakuumventilsitz
- 8: Steuerdruckleitung
- 9: Pneumatikzylinder
- 10: Kolben
- 11: Ejektor
- 12: Ausströmleitung
- 13: Ausströmleitung
- 14: Saug-Abblasleitung
- 15: Druckleitung
- 16: Einstellventilgruppe
- 17: Stopfen
- 18: Kolbenraum
- 19: Feder
- 20: Kolben
- 21: Ringnut
- 22: Dichtteil
- 23: Gegenstück
- 24: Sperrventil

## Patentansprüche

1. Sauggreifereinstellsteuerung mit Steuerventilblock zum ausgewählten Absenken von zu aktivierenden Sauggreifern (1) aus einem Sauggreiferfeld, wobei jeder Sauggreifer (1) an einem mit Druckleitungen (3;15) verbundenen Pneumatikzylinder (9) befestigt ist, **dadurch gekennzeichnet**, wobei an den Pneumatikzylinder (9) zum Anheben eine Druckleitung (15), zum Absenken eine Arbeitsdruckleitung (3) über den Steuerventilblock (2) und an den Sauggreifer (1) eine Saug-Abblasleitung (14) über den Steuerventilblock (2) angeschlossen ist, **dadurch gekennzeichnet, daß** an den Steuerventilblock (2) eine Steuerdruckleitung (8) so angeschlossen ist, daß der Steuerdruck stirnseitig auf die sich in den Ventilsitzen (5; 7) im Steuerventilblock befindenden Kolben (20) wirkt.

2. Sauggreifereinstellsteuerung nach Anspruch 1, **dadurch gekennzeichnet, daß** in dem Steuerventilblock (2) mindestens ein Paar Ventilsitze (5;7) eingelassen sind, wobei sich in jedem aus einem Kolbenraum (18) und einer Ausströmleitung (12;13) bestehenden Ventilsitz (5;7) vor der Einmündung der Arbeitsdruckluftzufuhr aus der Arbeitsdruckleitung (3) bzw. aus der Saug-Abblasleitung (6) ein im Kolbenraum (18) federgelagerter geteilter Kolben (20) befindet, dessen Dichtteil (22) gegen den Federdruck den Kolbenraum (18) gegen die Ausströmleitung (12;13) abdichten kann und dessen Gegenstück (23) bei Abschalten der Steuerdruckleitung (8) sich selbst haltend den Kolbenraum (18) gegen die Steuerdruckleitung (8) abdichtet.

3. Sauggreifereinstellsteuerung nach Anspruch 2, **dadurch gekennzeichnet, daß** sich in der Ausströmleitung (12) des die Saug-Abblasleitung (14) steuernden Ventilsitz (7) ein Ejektor (11) zur Unterdruckerzeugung in der Saug-Abblasleitung (14) befindet.

## Claims

1. Vacuum gripper adjustment controller with control valve block for selectively lowering, from a vacuum gripper array, vacuum grippers (1) that are to be activated, wherein each vacuum gripper (1) is fastened to a pneumatic cylinder (9) connected to pressure lines (3; 15), wherein a pressure line (15) is connected to the pneumatic cylinder (9) to effect lifting and an operating pressure line (3) is connected to the pneumatic cylinder (9) *via* the control valve block (2) to effect lowering, and a vacuum relief line (14) is connected to the vacuum gripper (1) *via* the control valve block (2), **characterised in that** a control pressure line (8) is connected to the control valve block (2) in such a manner that the control pressure acts upon the face of the pistons (20) situated in the valve seats (5; 7) in the control valve block.

2. Vacuum gripper adjustment controller according to claim 1, **characterised in that** at least one pair of valve seats (5; 7) is let into the control valve block (2), wherein a divided piston (20) supported on a spring in the piston chamber (18) is situated in each valve seat (5; 7), which is comprised of a piston chamber (18) and a discharge line (12; 13), upstream of the inlet of the operating compressed air supply from the operating pressure line (3) and from the vacuum relief line (6), respectively, the sealing portion (22) of which piston (20) is able to seal off the piston chamber (18) with respect to the discharge line (12; 13), counter to the spring pressure, and the counterpart (23) of which piston (20) self-maintainingly seals off the piston chamber (18) with respect to the control pressure line (8) upon cutting off of the control pressure line (8).

3. Vacuum gripper adjustment controller according to claim 2, **characterised in that** an ejector (11) for producing a vacuum in the vacuum relief line (14) is situated in the discharge line (12) of the valve seat (7) that controls the vacuum relief line (14).

## Revendications

1. Dispositif de commande pour le réglage de pinces aspirantes, doté d'un bloc distributeur de commande en vue de la descente sélective de pinces aspirantes (1) devant être activées à partir d'une zone de pinces aspirantes, chaque pince aspirante (1) étant fixée à un vérin pneumatique (9) relié à des conduits de pression (3 ; 15), sachant que le vérin pneumatique (9) est raccordé à un conduit de pression (15) pour provoquer la montée et est raccordé, par l'intermédiaire du bloc distributeur de commande (2), à un conduit (3) à pression de travail pour provoquer la descente, et sachant qu'un conduit (14) de détente d'aspiration est raccordé à la pince aspirante (1) par l'intermédiaire dudit bloc distributeur de commande (2), **caractérisé par le fait qu'**un conduit (8) à pression de commande est raccordé audit bloc distributeur de commande (2) de façon telle que la pression de commande agisse, frontalement, sur les pistons (20) situés dans les sièges d'obturation (5 ; 7) façonnés dans ledit bloc distributeur de commande.

2. Dispositif de commande pour le réglage de pinces aspirantes, selon la revendication 1, **caractérisé par le fait qu'**au moins une paire de sièges d'obturation (5 ; 7) est intégrée dans le bloc distributeur de commande (2), sachant que chaque siège d'obturation (5 ; 7) constitué d'une chambre (18) à piston et d'un conduit de sortie (12 ; 13) renferme, avant l'embouchure de l'amenée d'air comprimé de travail provenant respectivement du conduit (3) à pression de travail ou du conduit (6) de détente d'aspiration, un piston scindé (20) qui est monté élastiquement dans ladite chambre (18) ; dont la partie d'étanchement (22) peut assurer l'étanchéité de ladite chambre (18) vis-à-vis dudit conduit de sortie (12 ; 13), en opposition à la force élastique ; et dont la pièce complémentaire (23), se maintenant d'elle-même lors d'une neutralisation du conduit (8) à pression de commande, assure l'étanchéité de ladite chambre (18) vis-à-vis dudit conduit (8) à pression de commande.

3. Dispositif de commande pour le réglage de pinces aspirantes, selon la revendication 2, **caractérisé par le fait que** le conduit de sortie (12) du siège d'obturation (7) pilotant le conduit (14) de détente d'aspiration renferme un éjecteur (11), en vue d'engendrer une dépression dans ledit conduit (14) de détente d'aspiration.
